Europäisches Patentamt

**European Patent Office**

Office européen des brevets

(19)

(11) Publication number: **0 208 358 B1**

# EUROPEAN PATENT SPECIFICATION

(12)

(45) Date of publication of patent specification:
16.01.91 Bulletin 91/03

(51) Int. Cl.$^5$: **H01M 10/36, H01M 2/40**

(21) Application number: **86201025.3**

(22) Date of filing: **04.05.82**

(54) Battery stack of secondary cells.

(43) Date of publication of application:
14.01.87 Bulletin 87/03

(61) Publication number of the earlier application in accordance with Art. 76 EPC: **0093213**

(45) Publication of the grant of the patent:
16.01.91 Bulletin 91/03

(84) Designated Contracting States:
**DE FR GB IT**

(56) References cited:
**EP-A- 0 034 492**
**EP-A- 0 039 571**
**US-A- 4 197 169**

(73) Proprietor: **Kabushiki Kaisha Meidensha**
**1-17, Ohsaki 2-chome**
**Shinagawa-ku Tokyo 141 (JP)**

(72) Inventor: **Hashimoto, Takafumi**
**10-22, Ukima 4-chome**
**Kita-ku Tokyo 115 (JP)**

(74) Representative: **Ben-Nathan, Laurence Albert et al**
**Urquhart-Dykes & Lord 91 Wimpole Street**
**London W1M 8AH (GB)**

Jouve, 18, rue Saint-Denis, 75001 PARIS

## Description

Background of the Invention.

The present invention relates to electrolytes circulation type cell stack secondary batteries, particularly those in which the negatively active material is a metal such as cadmiun, zinc or lead, and more particularly the invention relates to such a secondary battery which suppresses and prevents the occurrence of three problems due to the flow of a small electric shunt current, i.e., (1) shunt current loss, (2) unequality of quantity of charged electricity and (3) occurrence of abnormal electrodeposition. The terms "shunt current" used herein defines "electric shunt current" ; the term "catholyte" defines "a cathode electrolyte" ; the term "anolyte" defines an "anode electrolyte" ; the term "cathode" defines a "negative electrode" ; the term "anode" defines a "positive electrode" and "potential" defines "electric potential".

Known cell stack batteries of the above type are designed so that generally, with a view to producing a high voltage from practical point view, a plurality of secondary cells are arranged in layers and connected in series such that each of the electrolytes is supplied to the cathode chamber or the anode chamber of each secondary cell via its catholyte inlet channel or anolyte inlet channel from a catholyte inlet-side common manifold or an anolyte inlet-side common manifold and the electrolyte is delivered via the catholyte outlet channel or the anolyte outlet channel of each secondary cell and through a catholyte outlet-side common manifold or an anolyte outlet-side common manifold.

Thus, since the plurality of secondary cells are connected in series and the circulation of the electrolytes is effected in a parallel connection manner, a small current is diverted to each of the inlet and outlet sides of each secondary cell due to the potential difference between the low potential side electrode and the high potential side electrode of the plurality of series connected cells, thus giving rise to the following difficulties.

(1) Shunt current loss : The loss of heat in the manifolds and the channels due to the flow of small shunt currents.

(2) Unequality of quantity of charged electricity : Since the current value (mA) of small shunt current flow through the channels of the respective cells differs from one cell to another, the value of current flow through the electrodes of the respective cells differs from one cell to another with the resulting unequality of the electrodeposition on the cathode or the quantity of charged electricity.

(3) Occurrence of abnormal electrodeposition : At the low potential side cathode ends to which a small current flows even a small shunt current may result in the occurrence of abnormal electrodeposition due to the current concentration. The invention is directed to alleviating these problems.

Many different proposals have heretofore been made to overcome such deficiencies due to the flow of small shunt current. For instance, the manifolds and the channels are decreased in diameter and increased in length so as to increase the electric resistance of the electrolytes in the manifolds and the channels and thereby to decrease the shunt current value. While this known method has the effect of providing improvements on some of the foregoing deficiencies due to the flow of shunt current, i.e., the shunt current loss and the unequality of quantity of charged electricity, even if the shunt current is decreased, the shunt current flows in the same direction during the charging period as well as the discharging period with the result that abnormal electrodeposition is caused as the cycle of charge and discharge is repeated, thus impeding the circulation of the electrolytes and causing a short-circuit between the secondary cells and thereby giving a limitation to the cycle life.

Another method has been proposed (US-A-4,197,169) in which a protective current is supplied to the manifolds so that the potential distribution in the manifolds is made equal to the potential distribution in the respective secondary cells thereby overcoming the deficiencies due to the flow of shunt current. While this method prevents the occurrence of shunt current with the resulting solution of the foregoing problems due to the flow of shunt current, the supply of the additional protective current produces an additional energy loss. While this energy loss can be reduced to some extent by decreasing the diameter of the manifolds, there is a limit to the decrease in the manifold diameter since this gives rise to ununiformness in the circulation of the electrolytes to the secondary cells and increase in the fluid head loss for the circulation pumps and thus this prior art method still has the problem of energy loss due to the protective current.

In our co-pending EP-A-0,093,213 from which this application has been divided, there is described and claimed a battery stack of secondary cells connected electrically in series and hydraulically in parallel, comprising a plurality of secondary cells each having a negative electrolyte inlet channel and a negative electrolyte outlet channel for circulation of a common negative electrolyte from a common negative inlet manifold through the secondary cells to a common negative electrolyte outlet manifold ; a positive electrolyte inlet channel and a positive electrolyte outlet channel for circulation of a common positive electrolyte from a common positive electrolyte inlet manifold through the secondary cell to a common positive electrolyte outlet manifold ; and first and second additional electrodes positioned adjacent each negative electrolyte inlet and outlet channel, each being connected to the cathode of a respective secondary cell ; characterized in that the first and second additional electrodes are disposed respectively only in the negative inlet channel and outlet channel of the lowest electric potential secondary cell, thereby to absorb shunt currents smaller than one thousandth of the charge current with the battery stack.

The present invention provides a battery stack of secondary cells connected electrically in series and hydraulically in parallel comprising a plurality of secondary cells each having a negative electrolyte inlet channel and a negative electrolyte outlet channel for circulation of a common negative electrolyte from a common negative inlet manifold through the secondary cells to a common negative electrolyte outlet manifold ; a positive electrolyte inlet channel and a positive electrolyte outlet channel for circulation of a common positive electrolyte from a common positive electrolyte inlet manifold through the secondary cells to a common positive electrolyte outlet manifold and the first and second auxiliary negative electrodes positioned adjacent the negative electrolyte inlet and outlet channel of the lowest electric potential secondary cell wherein a plurality of additional channels and an additional manifold are provided to enter said anolyte thereinto, and wherein first electrode means is fitted into said additional manifold and is connected to an anode terminal of said battery stack.

Brief Description of the Drawings.

Figs. 1, 4 and 5 show model longitudinal sectional views of cell stack secondary batteries according to specific embodiments of the invention.

Fig. 3 shows the behaviour of the batteries during the charging period.

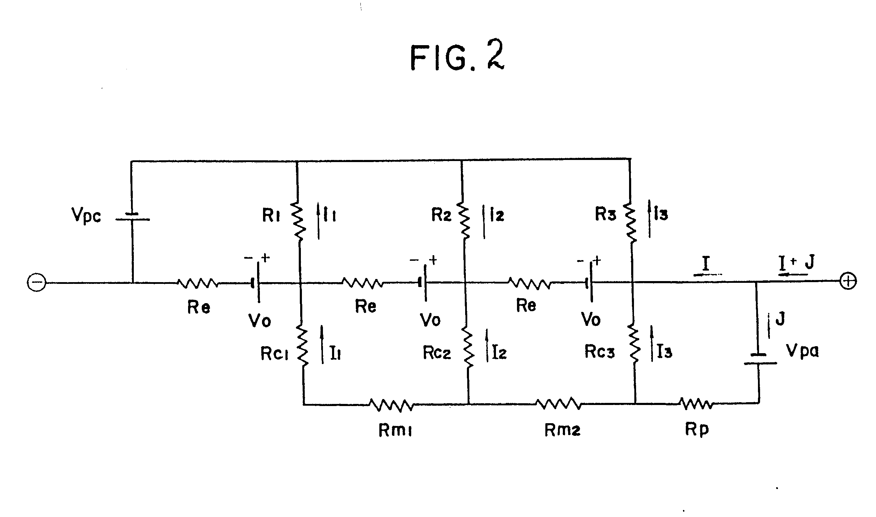

Fig. 2 shows a diagram showing resistance equivalent circuits for the cell stack secondary batteries.

The present invention will now be described in greater detail with reference to the illustrated embodiments which are included by way of illustration only.

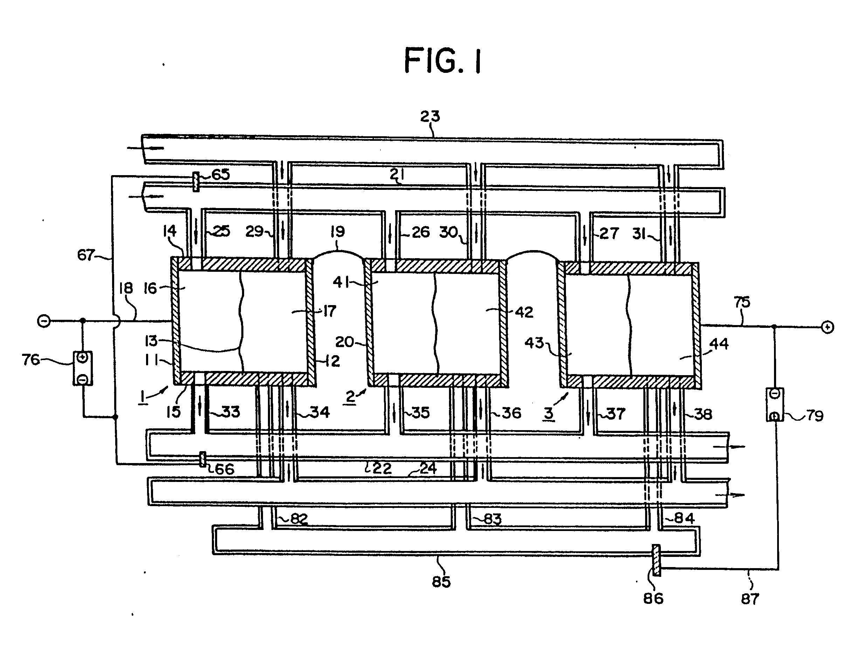

In Figure 1 numerals 1, 2 and 3 designate secondary cells. The description will now be made mainly with reference to the secondary cell 1. Numeral 11 designates a cathode, 12 an anode, and 13 an ion transmission separator arranged practically midway between the electrodes 11 and 12. Numerals 14 and 15 designate electrode frames. Numeral 16 designates a cathode chamber, 17 an anode chamber and 18 a cathode terminal of the secondary cell 1. The anode 12 of the cell 1 is connected to a cathode 20 of the adjoining secondary cell 2 by a connector 19.

Numeral 21 designates a catholyte inlet-side common manifold, 25, 26 and 27 catholyte inlet channels for connecting the catholyte inlet-side common manifold 21 to the cathode chambers 16, 41 and 43. Numeral 22 designates a catholyte outlet-side common manifold, and 33, 35 and 37 catholyte outlet channels for connecting the catholyte outlet-side common manifold 22 to the cathode chambers 16, 41 and 43. In like manner, numeral 23 designates an anolyte inlet-side common manifold, 24 an anolyte outlet-side common manifold, 29, 30 and 31 anolyte inlet channels and 34, 36 and 38 anolyte outlet channels. These electrolyte inlet channels 25, 26 and 27, 29, 30 and 31 and the electrolyte outlet channels 33, 35 and 37 and 34, 36 and 38 are extended perpendicular to the layer-building direction of the electrode frames 14 and 15 and arranged side by side along the electrode frames 14 and 15.

The cell stack secondary battery constructed as described above is the same as the prior art battery so that the catholyte is fed into the cathode chambers 16, 41 ..... of the secondary cells 1, 2,..... by a pump (not shown) by way of the catholyte inlet-side common manifold 21 and the electrolyte inlet channels 25, 26....., and the electrolyte is delivered to the outlet-side common manifold 22 by way of the electrolyte outlet channels 33, 35, ....... . On the other hand, the anolyte is introduced into the anode chambers 17, 42,....., of the secondary cells 1, 2, ..., by a pump (not shown) from the anolyte inlet-side common manifold 23 via the electrolyte inlet channels 29, 30, ..., and the electrolyte is delivered to the anolyte outlet-side common manifold 24 via the anolyte outlet channels 34, 36,.... .

Electrodes 65 and 66 are fitted respectively into catholyte manifolds 21 and 22 and their potentials are adjusted by an auxiliary power supply 76 to a value lower than the potential shown by a cathode 11 of a secondary cell 1, thereby preventing any shunt current occurring in the catholyte circulation system from flowing into cathode chambers 16, 41 and 43 of the respective secondary cells from the catholyte manifolds 21 and 22.

Thus Fig. 1 shows a longitudinal sectional view showing a three-layer cell stack secondary battery with shunt current protective means according to an embodiment of the invention, in which additional channels 82, 83 and 84 and an additional manifold 85 are connected to the respective anode chambers 17, 42 and 44. An auxiliary electrode 86 is fitted into the manifold 85 and is hermetically fixed in place. The electrode 86 is connected by means of a connecting member 87 to the auxiliary power supply 79 to the positive terminal 75.

Next, description will be made of the method of adjusting the internal electrolyte electric resistances of the additionallly provided manifold 85 and channels 82, 83 and 84 or the method of determining the size of the manifold 85 and the channels 82, 83 and 84.

Fig. 2 illustrates a resistance equivalent circuit corresponding to the three-layer cell stack secondary battery of Fig. 1, and the symbols in the Figure denote as follows :

Vo : secondary cell open-circuit voltage.

Re : secondary cell internal resistance.

$R_1, R_2, R_3$ : overall equivalent resistances of the internal electrolyte electric resistances of the catholyte and anolyte outlet and inlet common manifolds and channels.

$i_1, i_2, i_3$ : values of shunt currents flowing to the above equivalent resistances, that is, in the case of Fig. 1 where the electrodes 65 and 66 are respectively fitted in the catholyte manifolds 21 and 22 and the potential of the electrodes 65 and 66 is maintained by the auxiliary power supply 76 lower than the cathode terminal of the cell stack battery, $i_1$ represents the overall value of currents through the channels 25, 29, 33 and 34 of the secondary cell 1, $i_2$ the similar current value for the secondary cell 2, and $i_3$ the similar current value for the secondary cell 3. These current values correspond to those obtained in the case without the provision of the manifold 85 and the channels 82, 83 and 84 interconnecting the anode chambers 17, 42 and 44.

$I_1, I_2, I_3$ : value of currents flowing to the secondary cells 1, 2 and 3 from the additional manifold 85 and the channels 82, 83 and 84 interconnecting the anode chambers 17, 42 and 44.

$Rc_1, Rc_2, Rc_3$ : internal electrolyte electric resistance values of the additionally provided channels 82, 83 and 84.

$Rm_1, Rm_2$ : manifold internal electrolyte electric resistances between the additionally provided channels 82, 83 and 84.

Rp : internal electrolyte electric resistance of the manifold 85 between the additionally provided electrode and the junction of the manifold 85 and the channel 84 of the additionally provided channels 82, 83 and 84 which is closest to the anode terminal of the cell stack secondary battery.

Vpa : voltage of the auxiliary power supply (79 in Fig. 1).

Vpc : voltage of the auxiliary power supply (76 in Fig. 1)

J : sum of currents flowing into the secondary cells via the additionally provided manifold 85 and channels 82, 83 and 84.

I + J : input/output current of the cell stack secondary battery.

With this circuit, it is the purpose of the invention to set the values of $Rc_1$ to $Rc_3$, $Rm_1$, $Rm_2$ and Rp such that the current through the cathode of each cell or the charged electricity of each cathode is uniform.

In the equivalent circuit of Fig. 2, the essential requirement is to arrange such that the current through Vo and Re have a fixed value. If this fixed value is represent by $\alpha$, then the following equations are obtained

$$I + I_3 - i_3 = \alpha \qquad (44)$$

$$I + I_3 - i_3 + I_2 - i_2 = \alpha \qquad (45)$$

$$I + I_3 - i_3 + I_2 - i_2 + I_1 - i_1 = \alpha \qquad (46)$$

In other words, the following conditions are essential to ensure the equality of quantity of charged electricity

$$I_2 = i_2 \qquad (47)$$

$$I_1 = i_1 \qquad (48)$$

Also, the following circuit equations relating to $Rc_1$, $Rc_2$, $Rc_3$, $Rm_1$, $Rm_2$ and Rp are obtained

$$Vp = (I_1 + I_2 + I_3)Rp + I_3 Rc_3 \qquad (49)$$

$$Vo + (I+I_3-i_3)Re = (I_1+I_2)Rm_2+I_2Rc_2-I_3Rc_3 \qquad (50)$$

$$Vo + (I + I_3 - i_3)Re = I_1Rm_1 + I_1RC_1-I_2Rc_2 \qquad (51)$$

As a result, it is only necessary that the values of $i_1$, $i_2$ and $i_3$ are determined first and then the values of $Rc_1$ to $Rc_3$, $Rm_1$, $Rm_2$ and Rp are set by using the equations (47) to (51).

In applying the present invention to the three-layer cell stack secondary battery, the following conditions are added.

$$I_3 = i_3 \qquad (52)$$

$$Rm = Rm_1 = Rm_2 \qquad (53)$$

Thus, by substituting the equations (52) and (53) into the equations (49), (50) and (51), the following equations are obtained.

$$Vp = (i_1 + i_2 + i_3) Rp + i_3Rc_3 \qquad (54)$$

$$Vo + IRe = (i_1 + i_2)Rm + i_2Rc_2-i_3Rc_3 \qquad (55)$$

$$Vo + IRe = i_1Rm + i_1Rc_1 - i_2Rc_2 \qquad (56)$$

Now, the method of determining the values or $Rc_1$, $Rc_2$ and $Rc_3$ from the equations 54, 55 and 56 will be described with reference to a case where the present invention is applied to a three-layer $ZnBr_2$ cell stack secondary battery.

To obtain the values of $i_1$, $i_2$ and $i_3$, the electrodes 65 and 66 are respectively fitted into the catholyte manifolds (21 and 22 in Fig. 1) of the cell stack secondary battery of Fig. 1 without the manifold 85 and the channels 82, 83 and 84 and the potential of the electrodes 65 and 66 is maintained by the auxiliary power supply 76 lower than the cathode terminal of the cell stack secondary battery. Then the battery is operated with the following charging conditions.

$$\text{each secondary cell charging voltage} \quad Vo + IRe \fallingdotseq 2.0 \text{ V}$$

$$\text{charging current} \qquad\qquad\qquad\qquad I = 25 \text{ A}$$

$$\text{auxiliary supply voltage} \qquad\qquad Vpc = 1.0 \text{ V}$$

The values of the shunt currents flowing through the electrolyte circulation channels (25, 29, 26, 30, 27, 31 and 33, 34, 35, 36, 37, 38 shown in Fig. 1) are measured with a clip-on ammeter and then the sum totals of the shunt currents flowing out of the respective secondary cells are obtained as follows :

$$i_1 = 3 \text{ mA}$$

$$i_2 = 10 \text{ mA}$$

$$i_3 = 17 \text{ mA}$$

Now, if the following values are set

$$Vpa = 2.0 \text{ V}$$

$$Rp = 55 \ \Omega$$

$$Rm = 5.5 \ \Omega$$

then, the following are obtained from the equations (54) to (56)

$$Rc_1 \fallingdotseq 1{,}421 \ \Omega$$

$$Rc_2 \fallingdotseq 228 \ \Omega$$

$$Rc_3 \fallingdotseq 21 \ \Omega$$

By using these design values, the sizes of the channels and the manifold are adjusted and then the three-layer $ZnBr_2$ cell stack secondary battery is operated. In addition to the method of varying the channel size, the method of varying the number of channels also produces the same effect and also the same effect can be obtained by selecting $Rc_1 = Rc_2 = Rc_3$ and varying the resistance of the manifold. Further, the desired adjustments can be made by providing abstructions in the channels and the manifold.

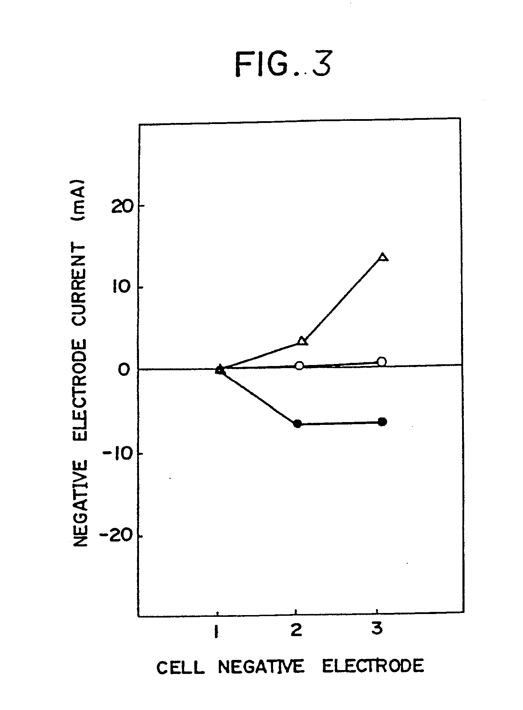

Fig. 3 shows the test results of the present embodiment. The values of currents through the cathode of the three-layer battery were measured by converting the currents through the respective channels and the current through the cathode (11 in Fig. 1) of the secondary cell having the lowest voltage among the cells of the three-layers of the secondary battery is selected as a zero point, thereby comparing the currents through the respective cathode and showing the resulting distribution of the quantities of charged electricity in the respective secondary cells. In the Figure, the ordinate represents the cathode current and the abscissa represents the secondary cell cathode.

Marked "●" is the case where the electrodes 65, 66 were not fitted in the cathode manifolds 21 and 22 and the manifold 85 and the channels 82, 83 and 84 were not provided in Fig. 1 .

Marked "Δ" is the case where the electrodes 65 and 66 were fitted into the cathode manifolds 21 and 22 and the potential of the auxiliary power supply 76 was lower by 2 V than the cathode terminal of the cell stack secondary battery.

Marked "O" is the case where the manifold 85 and the channels 82, 83 and 84 were provided in addition to the electrodes 65 and 66 and the potential of the electrode 86 was higher by 2 V than the anode terminal of the cell stack secondary battery.

As shown in Fig. 3, it will be seen that in accordance with the present invention the currents flowing through the cathode of the respective cells are substantially the same with the resulting decrease in the unequality of quantity of charged electricity.

When the test was continued for ten hours in each of the cases and the electrodeposition of zinc on the surface of the cathode was examined for comparison purposes, there was the electrodeposition of the dendritic zinc on the cathode ends near the channels in the case corresponding to the cell stack secondary battery without the application of the invention (Marked "●" in Fig. 3), and there was no trace of such abnormal electrodeposition in the cases of this embodiment incorporating the invention (marked "Δ" and "O" in Fig. 3).

Then, the loss due to the protective current was estimated on the basis of the currents through the channels and the manifolds and the internal electrolyte electric resistances of the manifolds and the channels and the results showed that in the case using the invention (marked "O" in Fig. 3) the loss was 208 mW and this was greater than 56 mW obtained in the case without the application of the invention (marked "●" in Fig. 3). However, where the protective current according to US-A- 4,197,169 was applied to the known type of battery without using the invention, the required protective current was 364 mA and the calculated value of the lose due the protective current was estimated to amount to 2,200 mW.

From the foregoing it will be seen that in accordance with this embodiment a cell stack secondary battery is provided which reduces the loss due to the protective current, reduces the deficiencies due to the flow of shunt current and increases the cycle life. Note that in some cases the cathode 65 and 66 may be connected directly to the cathode terminal of the cell stack secondary battery.

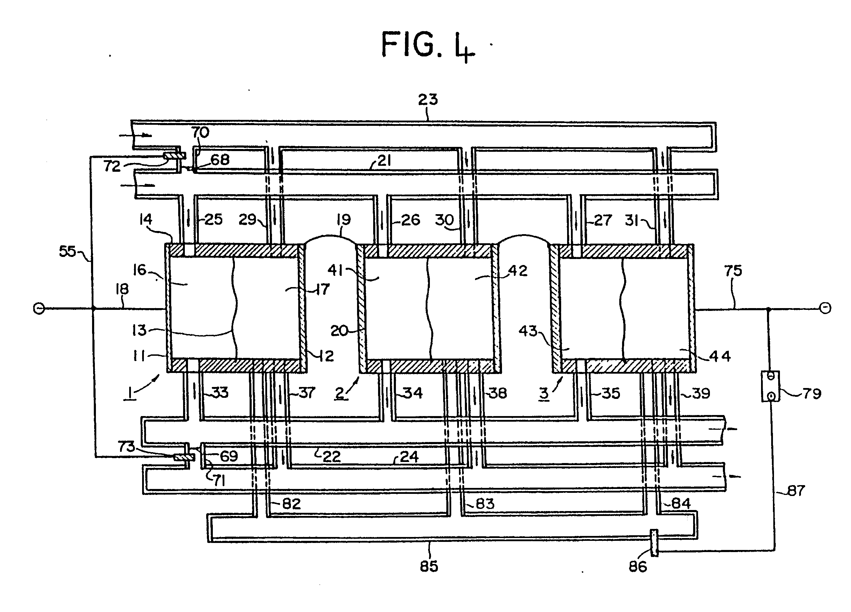

Fig. 4 is a longitudinal sectional view showing a cell stack secondary battery with shunt current protective means according to still another embodiment of the invention. In this embodiment, the catholyte manifolds 21 and 22 are respectively connected to the anolyte manifolds 23 and 24 by pipes 70 and 71, respectively, and separators 68 and 69 are respectively firmly held in position in the pipes 70 and 71 to prevent the anolyte and catholyte from mixing together. While, in the embodiment of Fig. 1, the electrodes 65 and 66 are fitted into the catholyte manifolds 21 and 22, in the present embodiment electrodes 72 and 73 are respectively fitted into the pipes 70 and 71 and immersed into the anolyte divided by the separators 68 and 69. The electrodes 72 and 73 are connected to the terminal 18 by a connector 55 and are held at the same potential as the cathode 11 of the secondary cell 1. The electrodes 72 and 73 and the cathode 11 of the secondary cell 1 form a cell since the electrodes 72 and 73 are positioned in the anolyte and the cathode 11 is in the catholyte on the other side of the separators 68 and 69, respectively. In other words, while the embodiment of Fig. 1 requires the auxiliary power supply 76, in the present embodiment the electrodes 72 and 73 are positioned in the anolyte to produce an electrochemical potential difference and thereby to provide the equivalent function with the auxiliary power supply 76.

Thus, the cell stack secondary battery of this embodiment functions practically in the same manner as the embodiment of Fig. 1 . Of course, the present embodiment may include the auxiliary power supply 76 so as to adjust the potential of the electrodes 72 and 73 as desired.

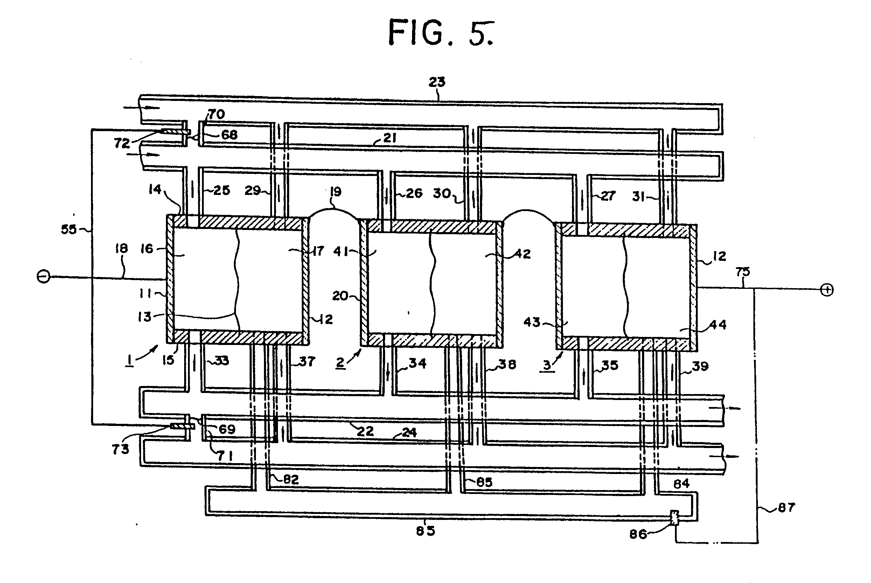

Fig. 5 is a longitudinal sectional view showing a cell stack secondary battery with shunt current protective means according to still another embodiment of the invention. This embodiment differs from the embodiment of Fig. 4 in that the electrode 86 fitted into the manifold 85 is eliminated and its function is served by the anode 12 of the secondary cell 3.

In applying this invention to this three-layer cell stack secondary battery, the current $(i_1 + i_2 + i_3)$ is supplied from the electrode 86 on the basis of the following assumption.

$$I_3 = i_3 \qquad\qquad (52)$$

However, since $I_3 = i_3$ is not the essential requirement, the values of $Rc_1$ to $Rc_3$ may be selected to obtain $I_3 = -(i_1+i_2)$ and in this way the electrode 86 and the auxiliary power supply 79 in the embodiment of Fig. 1 or 4 may be eliminated.

Thus, it is only necessary to determine the values of $Rc_1$, $Rc_2$ and $Rc_3$ by using the following two equations in place of the equations (54), (55) and (56)

$$V_0+(I-i_1-i_2-i_3)Re = (i + i_2)Rm+i_2Rc_2+(i_1+i_2)Rc_3 \qquad (57)$$

$$V_0+(I-i_1-i_2-i_3)Re = i_1Rm+i_1Rc_1-i_2Rc_2 \qquad (58)$$

By selecting $Vo = 1.8\,V$, $I = 25\,A$, $Re = 0.008\,\Omega$, $Rm = 5.5\,\Omega$, $i_1 = 3\,mA$, $i_2=10\,mA$, $i_3= 17\,mA$ and $Rc_3=50\,\Omega$ in like manner as the embodiment of Fig. 10, then $Rc_2$ 128 $\Omega$ and $Rc_1 = 1,087\,\Omega$ result and the same effect as the embodiment of Fig. 10 can be expected.

In this case, it is possible to fit the electrode 86 into the manifold 85 and connect it to the anode 12 as shown by the phantom line in Fig. 5 so as to apply a potential thereto. By using the auxiliary power supplies, it is possible to set the anode and cathode terminal side manifold potentials to any desired low or high values and thus it is possible to reduce the channel and manifold electric resistance losses required for attaining the condition for realizing the invention, that is, the condition that the current flowing out of the cathode chamber is equal to the current flowing out of the anode chamber.

From the foregoing description it will be seen that the cell stack secondary battery with shunt current protective means according to the invention has the effect of making the current flowing out of the cathode chamber equal to the current flowing out of the anode chamber and thereby eliminating the occurrence of abnormal electrodeposition and the unequality of quantity of charged electricity and reducing the shunt current loss. Thus, the invention can be said to be very useful in practical applications.

## Claims

1. A battery stack of secondary cells (1,2,3) connected electrically in series and hydraulically in parallel comprising a plurality of secondary cells (1,2,3) each having a negative electrolyte inlet channel (25) and a negative electrolyte outlet channel (33) for circulation of a common negative electrolyte from a common negative inlet manifold (21) through the secondary cells to a common negative electrolyte outlet manifold (22) ; a positive electrolyte inlet channel (29) and a positive electrolyte outlet channel (37) for circulation of a common positive electrolyte from a common positive electrolyte inlet manifold (23) through the secondary cells to a common positive electrolyte outlet manifold (24) and first and second auxiliary negative electrodes (65,66) positioned adjacent the negative electrolyte inlet and outlet channel of the lowest electric potential secondary cell (1) wherein a plurality of additional channels (82,83,84) and an additional manifold (85) are provided to enter said anolyte thereinto, and wherein first electrode means (86) is fitted into said additional manifold and is connected to an anode (positive electrode) terminal (75) of said battery stack.

2. A battery stack according to Claim 1 wherein said catholyte inlet (21) and outlet (22) manifolds are respectively connected to said anolyte inlet (23) and outlet (24) manifolds by way of ion transmission separator means (68,69) for the lowest electrical potential secondary cell, and wherein said auxiliary electrodes (72,73) are respectively fitted in said connected portions located on the anolyte side of said separator means and are connected electrically to a cathode terminal (18) of said battery stack.

3. A battery stack according to Claim 1 or Claim 2 wherein said auxiliary electrodes are connected to the cathode terminal of said battery stack through an auxiliary power supply.

4. A battery stack according to any one of Claims 1 -3 wherein said first electrode means (86) fitted into said additional anolyte manifold is connected to the anode terminal (75) of said battery stack through another auxiliary power supply (79).

## Ansprüche

1. Batteriestapel aus Sekundärzellen (1, 2, 3), die elektrisch in Reihe und hydraulisch parallel geschaltet sind, bestehend aus einer Anzahl von Sekundärzellen (1, 2, 3), von denen jede einen Katholyt-Eintrittskanal (25) und einen Katholyt-Austrittskanal (33) für die Umwälzung eines gemeinsamen Katholyten aus einem gemeinsamen Katholyt-Eingangsverteiler (21) durch die Sekundärzellen zu einem gemeinsamen Katholyt-Ausgangssammler (22) ; einen Anolyt-Eintrittskanal (29) und einen Anolyt-Austrittskanal (37) für die Umwälzung eines gemeinsamen Anolyten aus einem gemeinsamen Anolyt-Eingangsverteiler (23) durch die Sekundärzellen zu einem gemeinsamen Anolyt-Ausgangssammler (24), sowie erste und zweite negative Hilfselektroden (65, 66) aufweist, welche neben dem Katholyt-Eintritts- und -Austrittskanal der Sekundärzelle (1) mit dem niedrigsten elektrischen Potential angeordnet sind, wobei eine Anzahl von zusätzlichen Kanälen (82, 83, 84) und ein zusätzlicher Verteiler (85) vorgesehen ist, um den Anolyten dorthin einzuleiten, und wobei eine erste Elektrodeneinrichtung (86) in den zusätzlichen Verteiler einge setzt und mit einer Anodenklemme (75) (positive Elektrode) des Batteriestapels verbunden ist.

2. Batteriestapel nach Anspruch 1, wobei der Katholyt-Eingangsverteiler (21) und Ausgangssammler (22) jeweils mit dem Anolyt-Eingangsverteiler (23) und Ausgangssammler (24) durch eine Ionenübertragungs-Trenneinrichtung (68, 69) für die Sekundärzelle mit dem niedrigsten elektrischen Potential verbunden ist, und wobei die Hilfselektroden (72, 73) in den jeweiligen verbundenen Teilen auf der Anolytseite der Trenneinrichtung angeordnet und mit einer Kathodenklemme (18) des Batteriestapels verbunden sind.

3. Batteriestapel nach Anspruch 1 oder 2, wobei die Hifselektroden mit der Kathodenklemme des Batteriestapels durch eine Zusatz-Stromversorgung verbunden sind.

4. Batteriestapel nach einem der Ansprüche 1 - 3, wobei die erste Elektrodeneinrichtung (86), die in den zusätzlichen Anolyt-Verteiler eingesetzt ist, mit der Anodenklemme (75) des Batteriestapels durch eine weitere Zusatz-Stromversorgung (79) verbunden ist.

## Revendications

1. Un ensemble de batteries de cellules secondaires (1, 2, 3) reliées électriquement en série et hydrauliquement en parallèle comprenant plusieurs cellules secondaires (1, 2, 3) comportant chacune un canal d'entrée d'électrolyte négatif (25) et un canal de sortie d'électrolyte négatif (33) pour la circulation d'un électrolyte négatif commun depuis un collecteur d'entrée négatif commun (21) à travers les cellules secondaires vers un collecteur de sortie d'électrolyte négatif commun (22) ; un canal d'entrée d'électrolyte positif (29) et un canal de sortie d'électrolyte positif (37) pour la circulation d'un électrolyte positif commun depuis un collecteur d'entrée d'électrolyte positif commun (23) à travers les cellules secondaires vers un collecteur de sortie d'électrolyte positif commun (24) et des première et deuxième électrodes négatives auxiliaires (65, 66) positionnées adjacentes au canal d'entrée et de sortie d'électrolyte négatif de la cellule secondaire (1) située au potentiel électrique le plus bas dans lequel plusieurs canaux additionnels (82, 83, 84) et un collecteur additionnel (85) sont disposés pour y introduire ledit anolyte et dans lequel le premier moyen d'électrode (86) est disposé à l'intérieur dudit collecteur additionnel et est relié à une borne d'anode (75) (électrode positive) dudit ensemble de batteries.

2. Un ensemble de batteries selon la Revendication 1 dans lequel lesdits collecteurs d'entrée (21) et de sortie (22) de catholyte sont respectivement reliés auxdits collecteurs d'entrée (23) et de sortie (24) d'anolyte à l'aide d'un moyen séparateur à transmission d'ions (68, 69) pour la cellule secondaire au potentiel électrique le plus bas, et dans lequel lesdites électrodes auxiliaires (72, 73) sont respectivement introduites dans lesdites parties reliées situées sur le côté anolyte dudit moyen séparateur et sont reliées électriquement à une borne (18) de cathode dudit ensemble de batteries.

3. Un ensemble de batteries selon la Revendication 1 ou la Revendication 2 dans lequel lesdites électrodes auxiliaires sont reliées à la borne de cathode dudit ensemble de batteries par une source d'énergie auxiliaire.

4. Un ensemble de batteries selon l'une quelconque des Revendications 1 à 3 dans lequel ledit moyen d'électrode (86) introduit dans ledit collecteur additionnel d'anolyte est relié à la borne d'anode (75) dudit ensemble de batteries par une autre source d'énergie auxiliaire (79).

FIG. 1

# FIG. 2

# FIG. 3

FIG. 4.

FIG. 5.